(19) Europäisches Patentamt
European Patent Office
Office européen des brevets

(11) Veröffentlichungsnummer: **0 108 302**
**B1**

(12) # EUROPÄISCHE PATENTSCHRIFT

(45) Veröffentlichungstag der Patentschrift: **23.07.86**

(51) Int. Cl.⁴: **C 10 L 1/32**, B 01 F 17/00

(21) Anmeldenummer: **83110395.7**

(22) Anmeldetag: **19.10.83**

(54) **Verwendung von Aralkyl-polyalkylen-glykolethern zur Herstellung von wässrigen Kohle-Aufschlämmungen.**

(30) Priorität: **30.10.82 DE 3240309**

(43) Veröffentlichungstag der Anmeldung: **16.05.84 Patentblatt 84/20**

(45) Bekanntmachung des Hinweises auf die Patenterteilung: **23.07.86 Patentblatt 86/30**

(84) Benannte Vertragsstaaten: **BE DE FR GB SE**

(56) Entgegenhaltungen:
**FR-A-2 022 508**
**FR-A-2 283 950**
**US-A-2 630 457**
**US-A-4 302 212**

(73) Patentinhaber: **BAYER AG, Konzernverwaltung RP Patentabteilung, D-5090 Leverkusen 1 Bayerwerk (DE)**

(72) Erfinder: **Boehmke, Günther, Dr., Kurt-Schumacher- Ring 152, D-5090 Leverkusen (DE)**
Erfinder: **Mazanek, Jan, Dr., Haferkamp 2, D-5000 Koeln 80 (DE)**
Erfinder: **Botsch, Hansjürgen, Dr., Saarstrasse 41, D-5090 Leverkusen 1 (DE)**
Erfinder: **Schneider, Gottfried, Dr., Paul- Klee-Strasse 62, D-5090 Leverkusen 1 (DE)**

**EP 0 108 302 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

LIBER, STOCKHOLM 1986

**Beschreibung**

Die Erfindung betrifft die Verwendung von Aralkyl-polyalkylen-glykolethern zur Herstellung von wäßrigen Kohle-Aufschlämmungen.

Aufschlämmungen von Steinkohle sind aus der DE—AS—11 41 601 bekannt. Gemahlene Steinkohle läßt sich danach in Form wäßriger Schlämme durch Rohrleitungen zu den Verbrauchern pumpen. Da die Förderleistung von der Viskosität der Aufschlämmung abhängig ist, gehen die Bestrebungen dahin, die Viskosität bei gleichbleibendem Wassergehalt durch den Zusatz von oberflächenaktiven Substanzen zu reduzieren oder den Kohleanteil bei gleichbleibender Viskosität zu erhöhen. Als grenzflächenaktive Substanzen werden in der DE—AS—11 41 601 mit Alkylenoxid polysubstituierte Alkylphenole mit einem kernständigen gesättigten oder ungesättigten, geradkettigen oder verzweigten Kohlenwasserstoffrest mit 1 bis 30 Kohlenstoffatomen vorgeschlagen.

Zur Lösung des gleichen Problems werden in der US—PS—43 02 212 als oberflächenaktive Substanzen Alkyl-polyethylenglykolether mit einer Sulfogruppe angeführt.

Die bekannten oberflächenaktiven Substanzen sind jedoch für die technische Anwendung nicht befriedigend, da die so hergestellten wäßrigen Kohle-Aufschlämmungen insbesondere bei höheren Feststoffgehalten zu hohe Viskositäten aufweisen, um als fließfähige Gemische in die Technik eingesetzt werden zu können.

Es wurde gefunden, daß Aralkyl-polyalkylen-glykolether der Formel

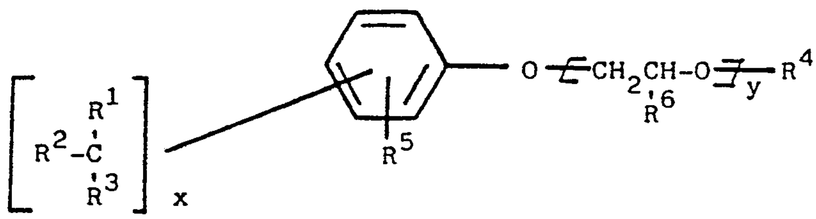

in der

$R^1$ für einen gegebenenfalls substituierten Arylrest mit 6 bis 18 C-Atomen steht,

$R^2$ und $R^3$ gleich oder verschieden sind und Wasserstoff, Alkyl mit 1 bis 18 C-Atomen oder gegebenenfalls substituiertes Aryl mit 6 bis 18 C-Atomen bedeuten,

x für einen Zahlenwert im Bereich von 1 bis 3 steht,

y für einen Zahlenwert im Bereich von 1 bis 500 steht und

$R^4$ Wasserstoff bedeutet oder einen der Reste

$-SO_3^{\ominus}M^{\oplus}$ oder 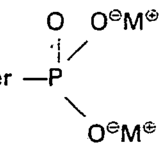

in denen

$M^{\oplus}$ für ein Metallion oder Ammonium steht, bedeutet,

$R^5$ Wasserstoff, Alkyl mit 1 bis 18 C-Atomen oder gegebenenfalls substituiertes Aryl mit 6 bis 18 C-Atomen bedeutet und

$R^6$ Wasserstoff oder Alkyl mit 1 bis 6 C-Atomen bedeutet, wobei $R^6$ in der Polyalkylenglykolkette bei den einzelnen Kettengliedern eine gleiche oder eine verschiedene Bedeutung haben kann,

in wäßrigen Kohle-Aufschlämmungen verwendet werden können, wobei diese den Aralkyl-polyalkylen-glykolether in einer Menge von 0,01 bis 5 Gew.-%, bezogen auf die gesamte wäßrige Kohle-Aufschlämmung und 30 bis 85 Gew.-% Kohle enthalten.

Ein Arylrest bedeutet hierbei bevorzugt einen aromatischen Kohlenwasserstoffrest aus der Benzolreihe mit 6 bis 12 Kohlenstoffatomen. Im besonderen seien hier der Phenyl-, Naphthyl- und Anthrazylrest genannt.

Der Arylrest kann gegebenenfalls substituiert sein. Als mögliche Substituenten seien im besonderen genannt:

Geradkettige oder verzweigte Alkylreste mit 1 bis 18, bevorzugt 1 bis 12, Kohlenstoffatomen, Aryl mit 6 bis 18, bevorzugt 6 bis 12 Kohlenstoffatomen, Alkoxy mit 1 bis 18, bevorzugt 1 bis 12, Kohlenstoffatomen und Halogen, wie Fluor, Chlor, Brom und Jod, bevorzugt Chlor.

Als Substituenten des Arylrestes seien im besonderen Methyl und Ethyl genannt.

Alkyl bedeutet bevorzugt einen geradkettigen oder verzweigten Kohlenwasserstoffrest mit 1 bis 12 Kohlenstoffatomen. Beispielsweise seien die folgenden Alkylreste genannt:

Methyl, Ethyl, Propyl, Isopropyl, Butyl, Isobutyl, Pentyl, Isopentyl, Hexyl, Isohexyl, Nonyl, Isononyl, Oktyl, Isooktyl und Stearyl.

Als Metallionen kommen im wesentlichen solche Ionen in Frage, die lösliche Sulfonium- und

Phosphoniumsalze bilden. Vorzugsweise seien hier die Alkalimetalle, wie Natrium und Kalium, die Erdalkalimetalle wie Magnesium und Calcium und Ammonium genannt.

Der Index x gibt an, durch wieviel Reste der Benzolkern substituiert ist. Erfindungsgemäß ist es selbstverständlich möglich, reine Verbindungen einzusetzen, bei denen x eine ganze Zahl von 1 bis 3 darstellt. Durch das Herstellungsverfahren bedingt ist es aber auch möglich, Gemische der erfindungsgemäßen Aralkyl-polyalkylenglykolether einzusetzen, bei denen x im statistischen Mittel auch eine gebrochene Zahl in dem Bereich von 1 bis 3 darstellen kann. Besonders bevorzugt werden erfindungsgemäß Aralkyl-polyalkylen-glykolether, bei denen x einen Wert im Bereich von 2 bis 3 hat.

Der Index y gibt die Länge der Polyalkylenglykolkette an. Die Polyalkylenglykolkette besteht aus 1 bis 500 Einheiten. Selbstverständlich kann es durch das Herstellungsverfahren bedingt sein, daß y im statischen Mittel auch einen gebrochenen Wert annimmt. Bevorzugt hat y einen Wert von 10 bis 250, im besonderen bevorzugt einen Wert von 30 bis 150.

$R^6$ als Substituent der Polyalkylenglykolkette kann Wasserstoff oder $C_1$- bis $C_6$-Alkyl bedeuten. Es ist möglich, daß die Reste $R^6$ in der Polyalkylenglykolkette eine verschiedene Bedeutung haben und statistisch oder in Blöcken verteilt sind.

Erfindungsgemäß werden Aralkyl-polyalkylen-glykolether der Formel

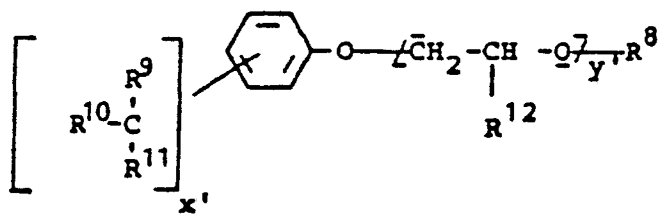

in der

$R^9$ gegebenenfalls durch niedere Alkylreste substituiertes Phenyl,

$R^{10}$ und $R^{11}$ gleich oder verschieden sind und Wasserstoff oder Methyl bedeuten,

x' für einen Zahlenwert im Bereich von 2 bis 3 steht,

y' für einen Zahlenwert im Bereich von 10 bis 250 steht,

$R^8$ Wasserstoff, $—SO_3NH_4$, $—SO_3Na$ oder $—SO_3K$ bedeutet und

$R^{12}$ Wasserstoff oder Methyl oder Ethyl bedeutet, bevorzugt.

Die erfindungsgemäßen Aralkyl-polyalkylen-glykolether sind an sich bekannt (DE—AS—11 21 814 und DE—PS—851 858) und können beispielsweise durch Polyaddition von Alkylenoxid an aralkylsubstituierte Phenole und gegebenenfalls durch Umsetzung der so hergestellten Verbindungen mit den Anhydriden oder Säurechloriden der Schwefel- oder Phosphorsäure und nachfolgender Neutralisation des Monoesters erhalten werden.

Im besonderen bevorzugt werden die folgenden Aralkylpolyalkylen-glykolether: Di - [phenylethyl] - phenyl - polyalkylenglykolether, Tri - [phenylethyl] - phenyl - polyalkylenglykolether, Di- und Tri - [methylphenylethyl] - phenylpolyalkylenglykolether, Di - [phenylethyl] - iso - octyl - bzw. - [isononyl] - phenyl - poly - alkylenglykolether, worin die Polyalkylenglykoletherketten aus Polyethylenoxiden, statistischen Polyethylen - Polypropylenoxid - Copolymeren, Polyethylenpropylenoxid-Blockcopolymeren bestehen können.

Die erfindungsgemäßen Aralkyl-polyalkylen-glykolether sind wasserlöslich. Sie werden im allgemeinen in wäßriger Lösung verwendet.

Die Handhabung der erfindungsgemäßen Verbindungen erfolgt im allgemeinen in wäßriger Lösung in einer Konzentration von 10 bis 60 Gew.-%, bevorzugt von 20 bis 50 Gew.-%, bezogen auf die Gesamtlösung. Diese Lösung kann dann bei der Herstellung der erfindungsgemäßen Gemische auf die gewünschte Konzentration weiterverdünnt werden. Aber auch die festen Verbindungen können in Form von Schuppen oder Perlchen eingesetzt werden.

Im besonderen bei hohen Konzentrationen der wäßrigen Aralkyl-polyalkylen-glykolether kann es vorteilhaft sein, zur Erniedrigung der Viskosität und damit zur Erleichterung der Anwendung noch andere organische Lösungsmittel zuzusetzen. Als Lösungsmittel kommen alle mit Wasser mischbaren Lösungsmittel in Frage. Beispielsweise seien genannt: Niedere aliphatische Alkohole ($C_1$ bis etwa $C_6$), wie Methanol, Ethanol, Propanol, Isopropanol, Butanol, Isobutanol, Pentanol, Isopentanol, Hexanol und Isohexanol.

Bei Verwendung von zusätzlichen organischen Lösungsmitteln werden diese im allgemeinen in einer Menge von 5 bis 40 Gew.-%, bevorzugt von 10 bis 25 Gew.-%, bezogen auf die Lösung der erfindungsgemäßen Verbindungen, eingesetzt.

Kohle bedeutet erfindungsgemäß mineralische und synthetische Kohle. Beispielsweise seien die folgenden Kohletypen genannt:

Anthrazit, Koks, Braunkohle, Moorkohle und insbesondere Steinkohle.

Kohle umfaßt erfindungsgemäß auch reinen Kohlenstoff in der Graphitmodifikation.

Die Kohle kann in unterschiedlicher Teilchengröße eingesetzt werden. Bevorzugt wird feingemahlene

Kohle mit einer Teilchengröße von kleiner als 300 µm. Im besonderen bevorzugt wird ein Kohlenpulver, das zu 75 bis 100 Gew.-% Teilchen enthält, die kleiner als 100 µm sind.

Die erfindungsgemäßen wäßrigen Kohleaufschlämmungen enthalten die Kohle in einer Menge von 30 bis 85 Gew.-%, bevorzugt von 55 bis 80 Gew.-%.

Die erfindungsgemäßen wäßrigen Kohleaufschlämmungen enthalten den Aralkyl-polyalkylen-glykolether in einer Menge von 0,01 bis 5 Gew.-%, bevorzugt von 0,2 bis 2,0 Gew.-%.

Es ist möglich, daß die erfindungsgemäßen wäßrigen Kohleaufschlämmungen noch weitere Anteile an anderen Brennstoffen enthalten. Andere Brennstoffe sind beispielsweise Heizöl, Naphtha, Rohöl, Methanol oder Ethanol. So ist es beispielsweise möglich, daß die erfindungsgemäßen wäßrigen Kohle-Aufschlämmungen 1 bis 60 Gew.-Teile, bevorzugt 1 bis 30 Gew.-Teile, der Erdölprodukte enthalten.

Die Herstellung der erfindungsgemäßen wäßrigen Kohle-Aufschlämmungen kann nach verschiedenen Verfahren erfolgen.

So ist es möglich, zuerst eine Aralkyl-polyalkylen-glykolether-Wasserlösung herzustellen und das Kohlepulver unter Rühren hinzuzugeben.

Nach einer anderen Verfahrensform mischt man zuerst die wäßrige Lösung des Aralkyl-polyalkylen-glykolethers mit grobkörniger Kohle und mahlt dieses Gemisch bis zu einer Korngröße von maximal 300 µm.

Weiterhin ist es möglich, die bei wäßrigen Kohleaufschlämmungen üblichen Hilfsstoffe, wie Stabilisatoren, Elektrolyte, Entschäumer und pH-Regler, einzusetzen.

Im Vergleich zu den bekannten wäßrigen Kohleaufschlämmungen zeigen die erfindungsgemäßen wäßrigen Kohleaufschlämmungen ein verbessertes Fließverhalten. Das bedeutet, daß die Gemische bei gleichbleibender Viskosität mehr Kohle enthalten als die bekannten wäßrigen Kohleaufschlämmungen.

Ihrem rheologischen Verhalten nach sind Kohle/Wasser Aufschlämmungen nichtnewtonsche plastische Flüssigkeiten mit strukturviskosem Verhalten und Fließgrenze. Ihre Viskosität hängt von der Schergeschwindigkeit (scheinbare Viskosität) ab. Die Viskosität der erfindungsgemäßen Kohle/Wasser Aufschlämmungen reicht von 3 mPa.s bis 5000 Mpa.s, bevorzugt von 5 bis 2000 mPa.s, bei einer Schergeschwindigkeit von 225 $s^{-1}$.

Besonders günstig ist neben dem Fließverhalten das Lagerverhalten der erfindungsgemäßen wäßrigen Kohleaufschlämmungen. So ist es möglich, die erfindungsgemäßen wäßrigen Kohleaufschlämmungen auch nach einer Lagerung leicht wieder in Bewegung zu bringen und das Zementieren bei vorübergehendem Absetzen der Kohle zu verhindern. Dies ist bebesonders vorteilhaft sowohl beim Transport als auch bei der Verbrennung bzw. Weiterverarbeitung der Gemische.

Die Herstellung von Kohle-Wasser Aufschlämmungen mit Hilfe von grenzflächenaktiven Verbindungen bereitet oft aufgrund einer mehr oder weniger starken Schaumbildung Schwierigkeiten. Die eingeschlossenen Luftblasen erhöhen die Viskosität der Kohle-Aufschlämmungen; bei einer zu starken Schaumbildung ist insbesondere die technische Herstellung der Kohle-Wasser Aufschlämmungen nicht möglich. Es gehört nun zu den weiteren Vorzügen der erfindungsgemäß eingesetzten Verbindungen, daß sie überraschenderweise nicht nur die Viskosität der Kohle-Wasser Aufschlämmungen erniedrigen, sondern daß sie gleichzeitig die gegebenenfalls auftretende Schaumbildung bzw. die Stabilität des gebildeten Schaumes gegenüber dem Stand der Technik stark verringern.

Die erfindungsgemäßen wäßrigen Kohle-Aufschlämmungen können direkt ohne weitere Zubereitung einer Verbrennung, beispielsweise in Heizkraftwerken, zugeführt werden.

Herstellung der Polyglykolether

Beispiel 1

94 g Phenol werden in Gegenwart von 1 g p-Toluolsulfonsäure mit 208 g Styrol von 130 bis 160°C ansteigend zur Reaktion gebracht. Nach 1 Stunde bei 150 bis 160°C Nachreaktion wird der Ansatz auf 120°C abgekühlt. Man setzt 3 g gepulvertes Kaliumhydroxid hinzu und erhitzt, um den Ansatz zu trocknen und das Kaliumphenolat herzustellen. In den mit Stickstoff belüfteten Reaktionsraum dosiert man bei 130 bis 160°C 3520 g Ethylenoxid hinzu. Das Reaktionsprodukt ist ein wasserlösliches, gelbliches Wachs, das bei 48 bis 50°C schmilzt.

Beispiel 2

An das Aralkylphenol aus Beispiel 1 werden unter den selben Bedingungen wie dort angegeben 1160 g Propylenoxid und anschließend 3520 g Ethylenoxid addiert. Das Reaktionsprodukt ist wasserlöslich und ergibt eine 30 bis 40 %ige wäßrige Lösung ohne Gelbildung.

Beispiel 3

94 g Phenol werden in Gegenwart von 1 g p-Toluolsulfonsäure mit 318 g Methylstyrol von 130 bis 160°C ansteigend zur Reaktion gebracht. Nach 1 Stunde bei 150 bis 160°C Nachreaktion wird der Ansatz auf 120°C abgekühlt. Man setzt 3 g gepulvertes Kaliumhydroxid hinzu und erhitzt, um den Ansatz zu trocknen und das Kaliumphenolat herzustellen. In den mit Stickstoff belüfteten Reaktionsraum dosiert man bei 130 bis 160°C 4400 g Ethylenoxid hinzu.

Das Produkt ist leicht wasserlöslich und bei Normaltemperatur wachsartig mit einem Schmelzpunkt von 58°C.

Beispiel 4

Nach den Bedingungen aus Beispiel 1 werden 108 g Kresol (Technisches Gemisch) mit den gleichen Mengen Styrol und Ethylenoxid umgesetzt. Man erhält ein wasserlösliches Wachs mit dem Schmelzpunkt von 45 bis 47°C.

Eine gebrauchsfertige Lösung läßt sich mit 55 g dieser Verbindung sowie 30 g Wasser und 15 g Methanol einstellen.

Beispiel 5

Zur Herstellung eines iso-alkyl-substituierten Produktes werden 220 g Isononylphenol unter den Bedingungen nach Beispiel 1 mit 188 g Styrol und 4400 g Ethylenoxid umgesetzt. Das leicht wasserlösliche Wachs zeigt einen Schmelzpunkt von 43 bis 46°C.

Beispiel 6

470 g Produkt nach Beispiel 3 werden bei 100°C im Vakuum getrocknet. Dann fügt man bei 75°C eine Mischung aus 6 g Harnstoff und 10 g Amidosulfonsäure hinzu, und heizt unter gutem Rühren 1 Stunde auf 90°C und 6 Stunden auf 100 bis 105°C. Anschließend wird der Ansatz mit ca. 0,5 bis 1 cm Ammoniaklösung auf pH 7 bis 8 gestellt (gemessen in 10 %iger wäßriger Lösung). Dieses Produkt läßt sich ohne Lösungsmittel zu einer 60 %igen wäßrigen Lösung einstellen.

Anwendungsbeispiele

Beispiel 7

Es wurde Steinkohle mit folgenden Eigenschaften verwendet:

| | |
|---|---|
| Kohlenstoff | 82% |
| Wasserstoff | 4,5% |
| Stickstoff | 1,1% |
| Sauerstoff | 2,6% |
| Schwefel | 1,2% |
| Gesamtfeuchtigkeit | 4,2% |

Siebanalyse (Siebrückstand)

| | |
|---|---|
| 192 µm | 0% |
| 96 µm | 9% |
| 64 µm | 17% |
| 48 µm | 24% |
| 24 µm | 47% |
| 10 µm | 59% |
| 8 µm | 78% |
| 2 µm | 93% |

Herstellung der wäßrigen Kohle-Aufschlämmung

2,25 g Aralkyl-polyalkylen-glykolether nach Beispiel 3 (Additiv) wurden in 132,45 g Wasser gelöst. Unter Rühren wurden 365,3 g der obengenannten feingemahlenen Kohle (d.h. 350 g trockener Kohle) zugegeben. Es entstand eine wäßrige Kohle-Aufschlämmung mit einer Viskosität von 670 mPa.s. Die Viskosität wurde mit einem Haake-Viskosimeter (Meßkörper MV II PSt) bei 20°C gemessen; die angegebenen Viskositäten wurden bei Schergeschwindigkeit D=225 $s^{-1}$ ermittelt. Durch Variieren der Kohlekonzentration bzw. der Menge der erfindungsgemäßen Verbindung wurden Slurries mit folgenden Eigenschaften erhalten (Prozentangaben bezogen auf Gesamtmischung):

| % Kohle | % Additiv | Viskosität [mPa.s] |
|---|---|---|
| 30 | 0,20 | 4 |
| 50 | 0,30 | 36 |
| 70 | 0,45 | 670 |
| 72 | 0,45 | 960 |
| 72 | 0,30 | 1420 |
| 74 | 0,55 | 2390 |
| 76 | 0,65 | 2690 |

Vergleichsbeispiel

Gemäß US—PS—43 02 212 wurden 0,45 Gew.-% eines Stearylalkohl-polyethylenglykolethers (Polyadditionsgrad: 100) unter sonst gleichen Bedingungen eingesetzt. Es wurde eine 72 %ige Kohle-Aufschlämmung mit einer Viskosität von 1100 mPa.s erhalten.

Beispiel 8

Es wurde Steinkohle mit folgenden Eigenschaften verwendet:

| | |
|---|---|
| Kohlenstoff | 68,2% |
| Wasserstoff | 4,3% |
| Stickstoff | 1,4% |
| Sauerstoff | 9,2% |
| Schwefel | 0,9% |
| Gesamtfeuchtigkeit | 7,9% |

Siebanalyse (Siebrückstand)

| | |
|---|---|
| 192 µm | 0% |
| 96 µm | 11% |
| 48 µm | 31% |
| 24 µm | 53% |
| 16 µm | 63% |
| 8 µm | 78% |
| 2 µm | 94% |

Bei der Herstellung und Messung der Slurries wurde wie im Beispiel 7 beschrieben verfahren. Es wurde der Aralkyl-polyalkylen-glykolether nach Beispiel 3 eingesetzt (Additiv).

Es wurden Slurries mit folgenden Eigenschaften erhalten:

| % Kohle | % Additiv | Viskosität [mPa.s] |
|---|---|---|
| 69 | 0,40 | 1060 |
| 69 | 0,50 | 810 |

Die Kettenlänge (y) des Ethylenoxid-Adduktes nach Beispiel 3 wurde variiert (69% Kohle; 0,5% Additiv).

| y | Viskosität [mPa.s] |
|---|---|
| 16 | 2000 |
| 27 | 1120 |
| 50 | 840 |
| 75 | 800 |
| 100 | 810 |
| 125 | 960 |
| 150 | 1090 |

Vergleichsbeispiele

Gemäß DE—AS—1 141 601 wurde ein Nonylphenolpolyethylenglykolether (y=30) verwendet. Die Viskosität des Slurrys betrug 1320 mPa.s.

Bei der Verwendung eines Stearylalkohol-polyethylenglykolethers (y=50) gemäß US—4 302 212 wurde unter sonst gleichen Bedingungen ein Slurry mit einer Viskosität von 980 mPa.s erhalten.

Beispiel 9

Es wurde Steinkohle mit folgenden Eigenschaften verwendet:

| | |
|---|---|
| Kohlenstoff | 77,4% |
| Wasserstoff | 4,2% |
| Stickstoff | 1,5% |
| Sauerstoff | 4,1% |
| Schwefel | 0,9% |

Siebanalyse (Siebrückstand)

| | |
|---|---|
| 192 µm | 6% |
| 128 µm | 21% |
| 96 µm | 26% |
| 64 µm | 41% |
| 48 µm | 51% |
| 24 µm | 76% |
| 8 µm | 95% |
| 2 µm | 0% |

Es wurde ein Aralkyl-polyalkylen-glykolether nach Beispiel 3 (Additiv) verwendet. Bei der Herstellung der Slurries wurde wie im Beispiel 7 beschrieben verfahren.

Es wurden Slurries mit folgenden Eigenschaften erhalten (0,5% Additiv):

| % Kohle | Viskosität [mPa.s] |
|---|---|
| 30 | 5 |
| 50 | 42 |
| 68 | 390 |
| 70 | 620 |
| 72 | 950 |
| 74 | 1180 |
| 76 | 2200 |

Einfluß der Temperatur bzw. des pH-Wertes (70% Kohle, 0,5% Emulgator):

| | Viskosität [mPa.s] |
|---|---|
| T=10°C | 680 |
| 20°C | 620 |
| 30°C | 490 |
| pH=7 | 620 |
| 9 | 610 |
| 11 | 550 |

Beispiel 10

Es wurde wie im Beispiel 7 verfahren, jedoch wurde der Aralkyl-polyalkylen-glykolether nach Beispiel 6 eingesetzt (0,5% Additiv). Es wurden Kohleslurries mit folgenden Eigenschaften erhalten:

| Kohlesorte | % Kohle | Viskosität [mPa.s] |
|---|---|---|
| Steinkohle nach Bsp. 7 | 72 | 1020 |
| Steinkohle nach Bsp. 8 | 69 | 910 |
| Steinkohle nach Bsp. 9 | 72 | 1050 |

Beispiel 11

Für die Herstellung eines Slurrys wurde ein Aralkyl-polyalkylen-glykolether gemäß Beispiel 5 (Additiv) verwendet. Unter sonst gleichen Bedingungen wie im Beispiel 7 beschrieben, wurde ein Slurry mit folgenden Eigenschaften erhalten:

| % Kohle | % Additiv | Viskosität (mPa.s) |
|---|---|---|
| 70 | 0,45 | 720 |
| 72 | 0,45 | 1020 |

Beispiel 12

Für die Herstellung eines Slurrys wurde ein Aralkyl-polyalkylen-glykolether gemäß Beispiel 1 (Additiv) verwendet. Unter sonst gleichen Bedingungen wie im Beispiel 7 beschrieben, wurden Slurries mit folgenden Eigenschaften erhalten:

| % Kohle | % Additiv | Viskosität (mPa.s) |
|---|---|---|
| 70 | 0,55 | 710 |
| 72 | 0,55 | 1010 |

Beispiel 13

Es wurde wie im Beispiel 7 bzw. 8 beschrieben verfahren, jedoch wurde ein Teil des Wassers durch Methanol ersetzt. Es wurden Aufschlämmungen mit folgenden Eigenschaften erhalten:

| % Kohle | % gemäß Beispiel 3 | % Methanol | Viskosität |
|---|---|---|---|
| (gem. Bsp. 7) 72 | 0,45 | 10 | 940 |
| (gem. Bsp. 8) 67 | 0,45 | 0 | 960 |
| (gem. Bsp. 8) 67 | 0,45 | 10 | 820 |
| (gem. Bsp. 8) 67 | 0,45 | 33 | 870 |

Beispiel 14

Für die Herstellung eines Slurrys wurde ein Aralkyl-polyalkylen-glykolether gemäß Beispiel 2 (Additiv) verwendet. Unter sonst gleichen Bedingungen wie im Beispiel 9 beschrieben wurden Slurries mit folgenden Eigenschaften erhalten:

| % Kohle | % Additiv | Viskosität (mPa.s) |
|---|---|---|
| 68 | 0,55 | 400 |
| 70 | 0,55 | 630 |
| 72 | 0,55 | 980 |

**Patentansprüche**

1. Verwendung von Aralkyl-polyalkylen-glykolether der Formel

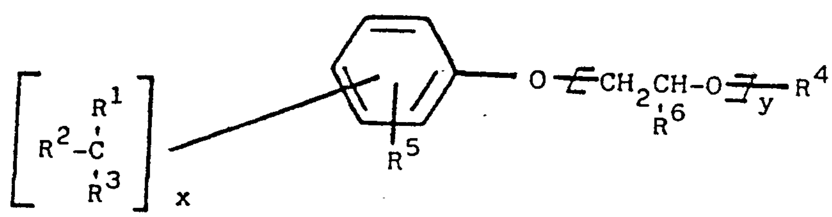

in der

$R^1$ für einen gegebenenfalls substituierten Arylrest mit 6 bis 18 C-Atomen steht,

$R^2$ und $R^3$ gleich oder verschieden sind und Wasserstoff, Alkyl mit 1 bis 18 C-Atomen oder gegebenenfalls substituiertes Aryl mit 6 bis 18 C-Atomen bedeuten,

x für einen Zahlenwert im Bereich von 1 bis 3 steht,

y für einen Zahlenwert im Bereich von 1 bis 500 steht und

$R^4$ Wasserstoff oder einen der Reste

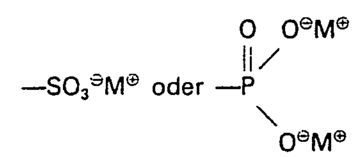

in denen

$M^{\oplus}$ für ein Metallion oder Ammonium steht, bedeutet,

$R^5$ Wasserstoff, Alkyl mit 1 bis 18 C-Atomen oder gegebenenfalls substituiertes Aryl mit 6 bis 18 C-Atomen bedeutet und

$R^6$ Wasserstoff oder Alkyl mit 1 bis 6 C-Atomen bedeutet, wobei $R^6$ in der Polyalkylenglykolkette bei den einzelnen Kettengliedern eine gleiche oder eine verschiedene Bedeutung haben kann, in wäßrigen Kohleaufschlämmungen, wobei diese den Aralkyl-polyalkylen-glykolether in einer Menge von 0,01 bis 5 Gew.-%, bezogen auf die gesamte wäßrige Kohle-Aufschlämmung und 30 bis 85 Gew.-% Kohle enthalten.

2. Wäßrige Kohleaufschlämmung, enthaltend Aralkyl-polyalkylen-glykolether der Formel

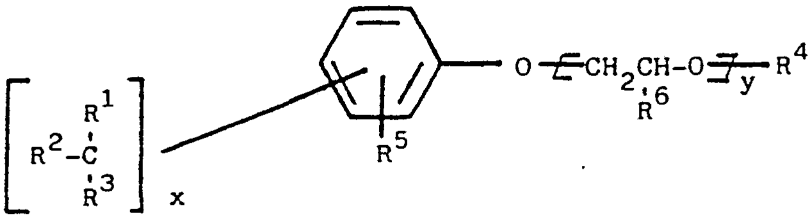

in der

$R^1$ für einen gegebenenfalls substituierten Arylrest mit 6 bis 18 C-Atomen steht,

$R^2$ und $R^3$ gleich oder verschieden sind und Wasserstoff, Alkyl mit 1 bis 18 C-Atomen oder gegebenenfalls substituiertes Aryl mit 6 bis 18 C-Atomen bedeuten,

x für einen Zahlenwert im Bereich von 1 bis 3 steht,

y für einen Zahlenwert im Bereich von 1 bis 500 steht und

$R^4$ Wasserstoff bedeutet oder einen der Reste

$-SO_3^{\ominus}M^{\oplus}$ oder 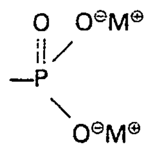

in denen

$M^{\oplus}$ für ein Metallion oder Ammonium steht,

$R^5$ Wasserstoff, Alkyl mit 1 bis 18 C-Atomen oder gegebenenfalls substituiertes Aryl mit 6 bis 18 C-Atomen bedeutet und

$R^6$ Wasserstoff oder Alkyl mit 1 bis 6 C-Atomen bedeutet, wobei $R^6$ in der Polyalkylenglykolkette bei den einzelnen Kettengliedern eine verschiedene oder identische Bedeutung haben

in einer Menge von 0,01 bis 5 Gew.-% und Kohle

in einer Menge von 30 bis 85 Gew.-%.

3. Wäßrige Kohleaufschlämmung nach Anspruch 2, dadurch gekennzeichnet, daß sie Anteile an anderen Brennstoffen enthält.

4. Verfahren zur Herstellung von wäßrigen Kohleaufschlämmungen gemäß Anspruch 2, dadurch gekennzeichnet, daß man den Aralkyl-polyalkylen-glykolether in entsprechender Menge in Wasser löst und dann die entsprechende Menge Kohlepulver hinzugibt.

5. Verfahren nach Anspruch 4, dadurch gekennzeichnet, daß man das Kohlepulver mit einer mittleren Teilchengröße von maximal 300 µm verwendet.

**Revendications**

1. Utilisation, dans des suspensions aqueuses de charbon, d'aralkyl-polyalkylène-glycoléthers de formule:

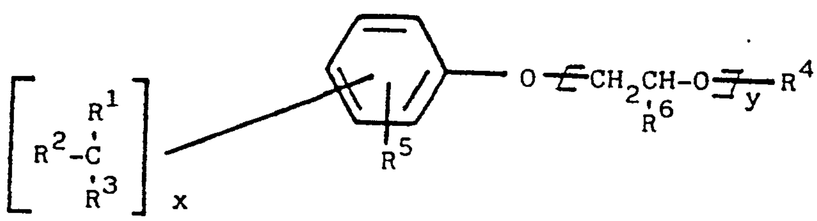

dans laquelle

$R^1$ représente un radical aryle éventuellement substitué contenant 6 à 18 atomes de carbone,

$R^2$ et $R^3$ sont identiques ou différents et représentent chacun un atome d'hydrogène, un radical alkyle contenant 1 à 18 atomes de carbone ou un radical aryle éventuellement substitué contenant 6 à 18 atomes de carbone,

x représente une valeur numérique se situant dans l'intervalle allant de 1 à 3,

y représente une valeur numérique se situant dans l'intervalle allant de 1 à 500, et

$R^4$ représente un atome d'hydrogène ou un des radicaux

$-SO_3^{\ominus}M^{\oplus}$ ou 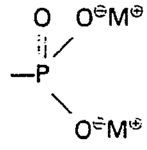

où

$M^{\oplus}$ représente un ion métallique ou l'ammonium,

$R^5$ représente un atome d'hydrogène, un radical alkyle contenant 1 à 18 atomes de carbone ou un radical aryle éventuellement substitué contenant 6 à 18 atomes de carbone, et

$R^6$ représente un atome d'hydrogène ou un groupe alkyle contenant 1 à 6 atomes de carbone, $R^6$ pouvant avoir, dans les différents membres de la chaîne de polyalkylène-glycol, une signification identique ou différente, ces suspensions contenant l'aralkyl-polyalkylène-glycoléther en une quantité de 0,01 à 5% en poids, calculé sur la totalité de la suspension aqueuse de charbon, ainsi que 30 à 85% en poids de charbon.

2. Suspension aqueuse de charbon contenant un aralkyl-polyalkylène-glycoléther de formule:

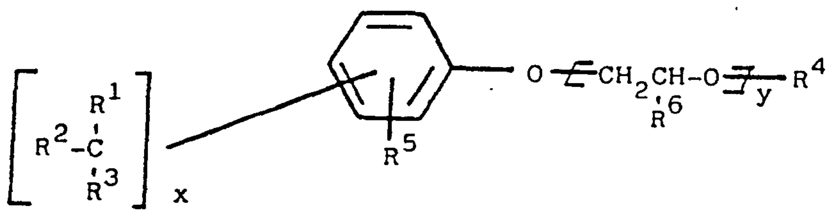

dans laquelle

$R^1$ représente un radical aryle éventuellement substitué contenant 6 à 18 atomes de carbone,

$R^2$ et $R^3$ sont identiques ou différents et représentent chacun un atome d'hydrogène, un radical alkyle contenant 1 à 18 atomes de carbone ou un radical aryle éventuellement substitué contenant 6 à 18 atomes de carbone,

x représente une valeur numérique se situant dans l'intervalle allant de 1 à 3,

y représente une valeur numérique se situant dans l'intervalle allant de 1 à 500, et

$R^4$ représente un atome d'hydrogène ou un des radicaux

$-SO_3^{\ominus}M^{\oplus}$ ou 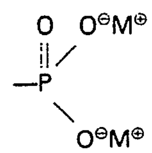

où

$M^{\oplus}$ représente un ion métallique ou l'ammonium,

$R^5$ représente un atome d'hydrogène, un radical alkyle contenant 1 à 18 atomes de carbone ou un radical aryle éventuellement substitué contenant 6 à 18 atomes de carbone, et

$R^6$ représente un atome d'hydrogène ou un radical alkyle contenant 1 à 6 atomes de carbone, $R^6$ ayant, dans les différents membres de la chaîne de polyalkylène-glycol, une signification différente ou identique,

en une quantité de 0,01 à 5% en poids, ainsi que du charbon

en une quantité de 30 à 85% en poids.

3. Suspension aqueuse de charbon selon la revendication 2, caractérisée en ce qu'elle contient des quantités d'autres substances combustibles.

4. Procédé de préparation de suspensions aqueuses de charbon selon la revendication 2, caractérisé en ce qu'on dissout l'aralkyl-polyalkylène-glycoléther en une quantité correspondante dans l'eau, puis on ajoute la quantité correspondante de poudre de charbon.

5. Procédé selon la revendication 4, caractérisé en ce qu'on utilise la poudre de charbon en particules d'une granularité moyenne maximale de 300 µm.

6. Procédé de préparation de suspensions aqueuses de charbon selon la revendication 2, caractérisé en ce qu'on mélange les quantités correspondantes de l'aralkyl-polyalkylène-glycoléther et du charbon avec l'eau et on broie ce mélange jusqu'à une granularité maximale de 300 µm.

**Claims**

1. Use of aralkyl polyalkylene glycol ether of the formula

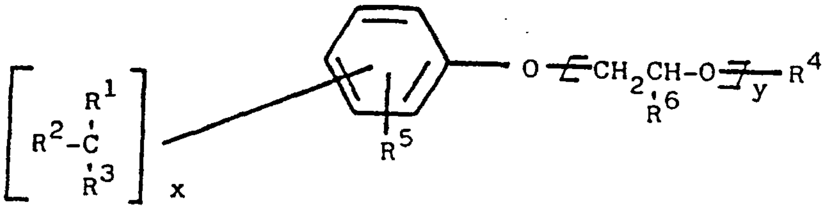

in which

$R^1$ represents an optionally substituted aryl radical with 6 to 18 C atoms,

$R^2$ and $R^3$ are identical or different and denote hydrogen, alkyl with 1 to 18 C atoms or optionally substituted aryl with 6 to 18 C atoms,

x represents a numerical value in the range from 1 to 3,

y represents a numerical value in the range from 1 to 500 and

$R^4$ denotes hydrogen or one of the radicals

$-SO_3^{\ominus}M^{\oplus}$ or 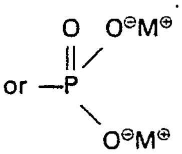

in which

$M^{\oplus}$ represents a metal ion or ammonium,

$R^5$ denotes hydrogen, alkyl with 1 to 18 C atoms or optionally substituted aryl with 6 to 18 C atoms and

$R^6$ denotes hydrogen or alkyl with 1 to 6 C atoms, it being possible for $R^6$ to have an identical or different meaning in the individual chain members in the polyalkylene glycol chain,

in aqueous coal slurries, the latter containing the aralkyl polyalkylene glycol ether in a quantity of 0.01 to 5% by weight, based on the total aqueous coal slurry, and 30 to 85% by weight of coal.

2. Aqueous coal slurry, containing aralkyl polyalkylene glycol ether of the formula

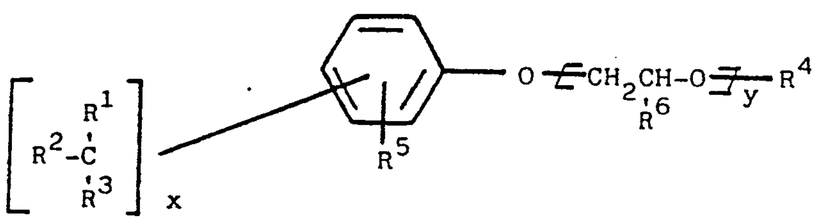

in which

$R^1$ represents an optionally substituted aryl radical with 6 to 18 C atoms,

$R^2$ and $R^3$ are identical or different and denote hydrogen, alkyl with 1 to 18 C atoms or optionally substituted aryl with 6 to 18 C atoms,

x represents a numerical value in the range from 1 to 3,

y represents a numerical value in the range from 1 to 500 and

$R^4$ denotes hydrogen or one of the radicals

$-SO_3^{\ominus}M^{\oplus}$ or 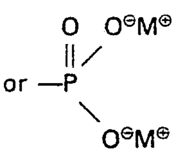

in which

$M^{\oplus}$ represents a metal ion or ammonium,

$R^5$ denotes hydrogen, alkyl with 1 to 18 C atoms or optionally substituted aryl with 6 to 18 C atoms and

$R^6$ denotes hydrogen or alkyl with 1 to 6 C atoms,

$R^6$ having an identical or different meaning in the individual chain members in the polyalkylene glycol chain,

in a quantity of 0.01 to 5% by weight and coal

in a quantity of 30 to 85% by weight.

3. Aqueous coal slurry according to Claim 2, characterised in that it contains amounts of other fuels.

4. Process for the preparation of aqueous coal slurries according to Claim 2, characterised in that the aralkyl polyalkylene glycol ether is dissolved in an appropriate quantity in water and then the appropriate quantity of pulverised coal is added.

5. Process according to Claim 4, characterised in that the pulverised coal is used with an average particle size of at most 300 μm.

6. Process for the production of aqueous coal slurries according to Claim 2, characterised in that the appropriate quantities of aralkyl polyalkylene glycol ether and coal are mixed with water and this mixture is ground to a particle size of at most 300 μm.